## Europäisches Patentamt
## European Patent Office
## Office européen des brevets

(19)

(11) Numéro de publication: **O O38 879**
**B1**

(12) **FASCICULE DE BREVET EUROPEEN**

(45) Date de publication du fascicule du brevet: **27.06.84**

(21) Numéro de dépôt: **80200984.5**

(22) Date de dépôt: **17.10.80**

(51) Int. Cl.³: **H 02 K 19/26,**
**H 02 K 19/12,**
**H 02 K 17/16, H 02 K 17/26**

(54) **Machine électrique tournante.**

(30) Priorité: **25.04.80 BE 2058536**
**30.09.80 BE 2058779**

(43) Date de publication de la demande:
**04.11.81 Bulletin 81/44**

(45) Mention de la délivrance du brevet:
**27.06.84 Bulletin 84/26**

(84) Etats contractants désignés:
**AT CH DE FR GB IT LI LU NL SE**

(56) Documents cités:
**DE - A - 1 638 496**
**DE - A - 2 040 630**
**FR - A - 2 368 171**
**GB - A - 712 372**

(73) Titulaire: **Kupisiewicz, Stefan**
**55, rue Bois d'Evegnée**
**B-4634 Soumagne (BE)**

(73) Titulaire: **Schoebrechts, Jacques Jean**
**61, Chaussée de Wégimont**
**B-4634 Soumagne (BE)**

(72) Inventeur: **Kupisiewicz, Stefan**
**55, rue Bois d'Evegnée**
**B-4634 Soumagne (BE)**
Inventeur: **Schoebrechts, Jacques Jean**
**61, Chaussée de Wégimont**
**B-4634 Soumagne (BE)**

(74) Mandataire: **Bockstael, Daniel**
**M.F.J. Bockstael Arenbergstraat 13**
**B-2000 Anvers (BE)**

Courier Press, Leamington Spa, England.

# 0 038 879

**Description**

La présente invention concerne une machine électrique tournante, réalisable sous forme d'alternateur synchrone, de moteur synchrone, asynchrone ou asynchrone synchronisé.

Les machines de ce type, plus particulièrement celles de puissance relativement faible, sont en grande majorité équipées de collecteurs à bagues et balais malgré que ces derniers présentent de nombreux désavantages: usure, pertes de contact, étincelles etc. La raison en est que l'adjonction d'un excitateur augmenterait exagérément leur prix de revient.

Pour illustrer ce qui précède, on peut signaler que tous les véhicules automobiles de grande série sont actuellement encore équipés d'alternateurs à bagues et balais, malgré les avantages considérables qu'apporterait la suppression de ces éléments.

D'autres techniques (aimants permanents, immobilisation de l'inducteur, machines à réluctance variable, rotors bobines etc.) ont été élaborées, mais leur mise en oeuvre entraîne des complications technologiques telles que leur commercialisation est restreinte à des cas bien particuliers (atmosphères explosives, ou particulièrement corrosives).

Parmi ces techniques, on connaît dans l'état actuel de la technique (voir brevet britannique n° 712.372) une machine électrique tournante du type comprenant une partie fixe et une partie mobile coaxiales, dans laquelle la partie fixe comporte un premier et un deuxième enroulement et la partie mobile un troisième enroulement, les premiers et deuxièmes enroulements ayant des pas polaires multiples pair ou sous-multiple pair l'un de l'autre et une inductance mutuelle nulle, le troisième enroulement étant unique et fermé sur lui-même, l'arrangement étant tel que le premier enroulement puisse générer un champ inducteur induisant des courants dans le troisième enroulement, ces derniers générant un champ inducteur, en rotation relative par rapport à la partie mobile, de même pas polaire que le deuxième enroulement et interagissant magnétiquement avec ce dernier.

Cet alternateur présente de multiples désavantages dont:

— une complexité importante du bobinage rotorique rendant le coût de la machine prohibitif pour sa commercialisation en grande série;
— la présence d'un bobinage rotorique complexe empêche l'adoption de vitesses de rotation élevées et donc d'obtenir des puissances massiques importantes;
— la fiabilité réduite, bien connue, d'une machine à rotor bobiné.

La présente invention a pour but de fournir une machine sans collecteur à bagues ni balais ne présentant aucun des désavantages susmentionnés.

Plus particulièrement, l'invention a pour but de réaliser une machine tournante du type envisagé, réalisant deux fonctions différentes dans un même circuit magnétique, dont le rotor est simplifié à l'extrême.

A cet effet, une machine selon l'invention, du type comprenant une partie fixe et une partie mobile coaxiales, se caractérise substantiellement en ce que la partie fixe porte un premier et un deuxième enroulement et la partie mobile un troisième enroulement, les premier et deuxième enroulements ayant des pas polaires multiple pair ou sous-multiple pair l'un de l'autre et une inductance mutuelle nulle, le troisième enroulement étant unique et fermé sur lui-même, l'arrangement étant tel que le premier enroulement puisse générer un champ inducteur induisant des courants dans le troisième enroulement, ces derniers générant un champ inducteur en rotation relative par rapport à la partie mobile, de même pas polaire que le deuxième enroulement et interagissant magnétiquement avec ce dernier, caractérisé en ce que ce troisième enroulement est constitué par un nombre de jeux de barres, dont chacun comprend deux barres interconnectées, ledit nombre de jeux de barres étant soit égal au nombre de paires de pôles de l'enroulement statorique de pas polaire le plus large dans le cas d'une réalisation monophasée du rotor, soit le triple de ce nombre de paires de pôles dans le cas d'une réalisation triphasée.

Comme il apparaîtra plus clairement de la description ci-après, ces dispositions, en permettant de développer dans un même circuit magnétique des fonctions différentes, permettent e.a. également de réduire par rapport à l'état de la technique les exigences en fer et en cuivre et de réaliser la partie mobile selon une technique similaire à celle d'un rotor asynchrone à cage.

Pour plus de clarté, l'invention est décrite plus en détail ci-après avec référence aux dessins annexés, dans lesquels:

la figure 1 représente schématiquement une machine selon l'invention;
la figure 2 est une coupe selon la ligne II—II de la figure 1; et
les figures 3 à 6 expliquent la réalisation du rotor d'une machine selon l'invention.

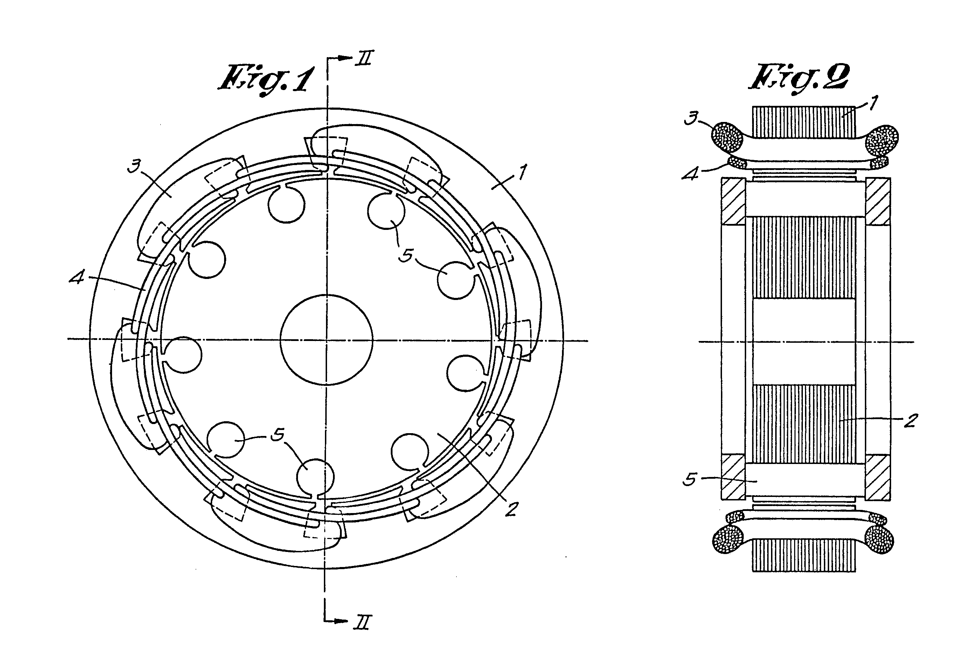

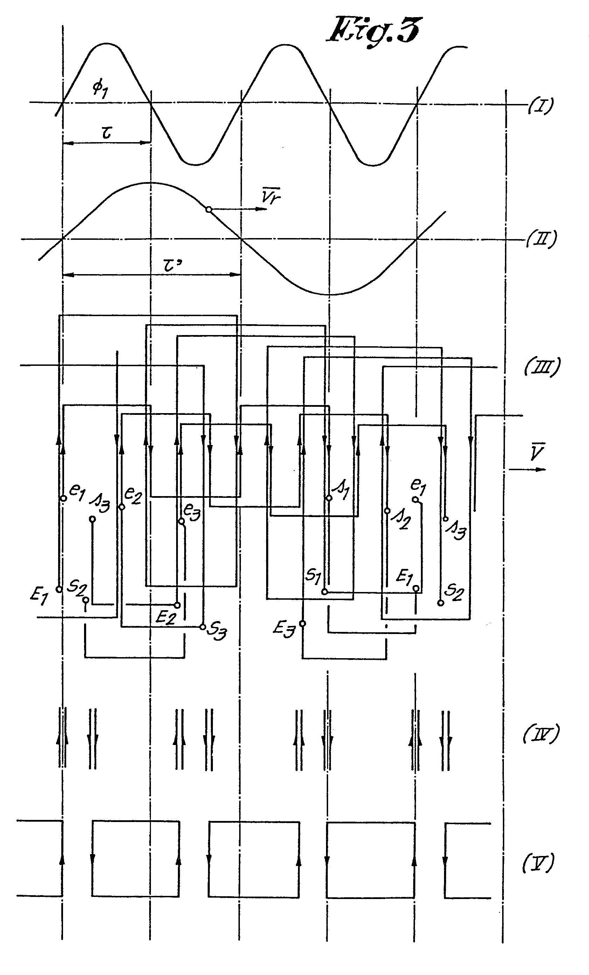

La machine représentée aux figures 1 et 2 est un alternateur synchrone, comportant une partie fixe ou stator *1* et une partie mobile ou rotor *2* concentriques, réalisées en tôles magnétiques feuilletées. Dans cet exemple, le stator *1* comporte douze encoches et le rotor neuf.

Le stator *1* porte un premier enroulement *3* constitué de six bobines, de pas polaire $\tau$ ainsi qu'un deuxième enroulement diphasé *4*, constitué de deux fois trois bobines, de pas polaire $\tau'=2\tau$.

L'inductance mutuelle entre les enroulements *3* et *4* est nulle.

**0 038 879**

Le rotor *2* porte neuf barres *5*.

Pour le fonctionnement en alternateur, un courant continu d'excitation est injecté dans le premier enroulement *3*, tandis que le rotor *2* est entraîné avec un vitesse $\eta$ (t/sec).

Le courant d'excitation crée un flux fixe $\Phi 1$ de pas polaire $\tau$ rapport au stator et ce flux induit dans les barres *5* des courants de fréquence $f_1 = p_1 \cdot \eta$, $2p_1$ étant le nombre de pôles ainsi formés (douze, dans cet exemple).

De par une disposition judicieuse et particulière des barres rotoriques *5*, ces courants de fréquence $f_1$ engendrent:

1. — une force magnétomotrice $Fmm_1$ de pas polaire $\tau$, tournant dans le sens inverse du rotor *2* et ayant pour action de réduire considérablement le flux $\Phi 1$ comme dans le cas d'un alternateur en court-circuit;

2. — une force magnétomotrice $Fmm_2$ tournant dans le même sens que le rotor *2* et, dans cet exemple, de pas polaire $\tau' = 2\tau$, avec un nombre de paires de pôles

$$p_2 = \frac{p_1}{2}.$$

La vitesse de rotation relative de $Fmm_2$ par rapport au rotor *2* est

$$\eta_\tau = \frac{f_1}{p_2}.$$

Cette $Fmm_2$ rencontre l'enroulement *4* du stator *1* à une vitesse égale à

$$\eta_2 = \eta + \eta_\tau = (1 + \frac{p_1}{p_2})\eta.$$

Dans cet exemple, $\eta_2$ vaut donc $3\eta$.

La vitesse linéaire de cette $Fmm_2$ est donc très élevée et, en raison du faible nombre d'encoches rotoriques et des surfaces de denture importantes, la valeur du flux $\Phi 2$ engendré par ladite $Fmm_2$ est également très élevée car l'induction dans l'entrefer peut aisément atteindre des valeurs de l'ordre de 1,1T. En outre, le pas polaire est doublé.

La fréquence des fem engendrées dans l'enroulement *4* est égale à $f_2 = (p_1 + p_2)\eta$.

Les caractéristiques susdécrites conduisent à un enroulement *4* dans lequel le nombre de spires nécessaires pour induire une fem donnée est considérablement réduit par rapport à l'état de la technique. De même, les réactions d'induit sont réduites dans un même rapport, ce qui se répercute favorablement sur l'enroulement *3*.

On remarquera également que l'extrême simplicité du rotor conduit à une machine dont les vitesses de rotation limites peuvent être extrêmement élevées. Cet aspect concourt également à la réalisation d'une machine de puissance massique très élevée.

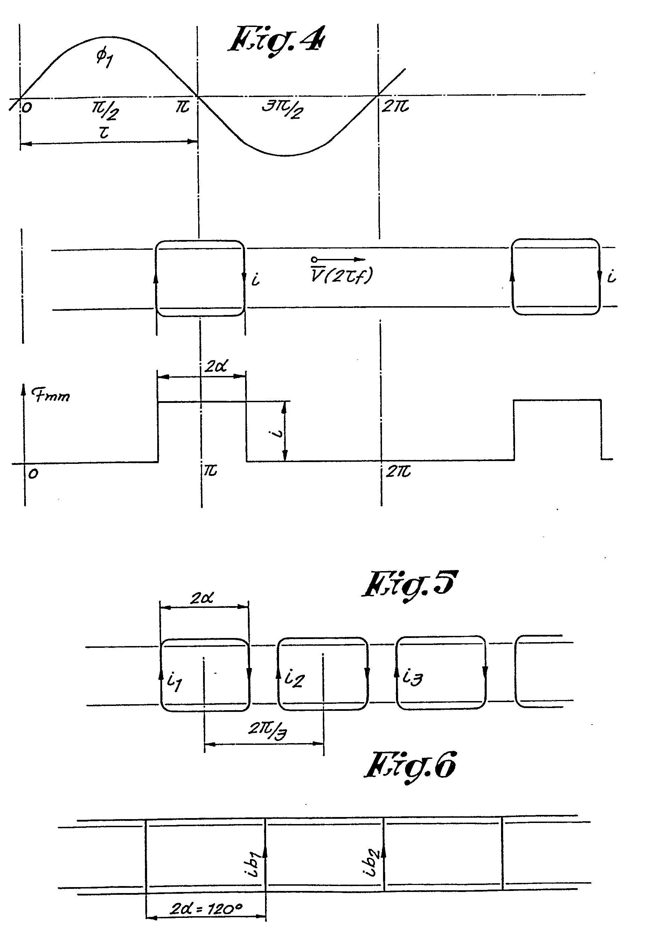

Il a été dit ci-avant que les barres rotoriques *5* devaient être judicieusement disposées. Ceci est expliqué ci-dessous avec références aux figures 3 à 6.

Soient un stator inducteur créant un flux $\Phi 1$, schématisé par quelques pôles de pas polaire $\tau$ (fig. 3-I) et un rotor triphasé à une encoche par pôle et par phase dont le bobinage monospire est représenté par e1—s1, e2—s2, e3—s3 (fig. 3-III). Ce bobinage est le siège de fem triphasées de fréquence

$$f_1 = \frac{V}{2\tau},$$

V étant la vitesse linéaire du rotor par rapport au stator.

La sortie de ce bobinage e—s est raccordée à un second bobinage monospire, non-diamétral, représenté par $E_1$—$S_1$, $E_2$—$S_2$, $E_3$—$S_3$ et de pas polaire $\tau' = 2\tau$. La disposition de ce second bobinage est telle qu'il est traversé par les courants induits dans le bobinage e—s, il est le siège d'une fmm se déplaçant dans le même sens que le rotor, avec une vitesse relative $v\tau = 2\tau'f$.

La vitesse totale de cette fmm par rapport au stator est égale à $v + v\tau = 2\tau f + 2\tau'f$ et, puisque dans le cas considéré $\tau' = 2\tau$,

$$v + v\tau = 2\tau f + 4\tau f = 6\tau f = 3v.$$

On peut remarquer sur la figure 3 (III) que l'inductance mutuelle entre e et E est nulle et que certaines encoches sont traversées par des courants de mêmes phase et amplitude mais de sens

3

opposé, ceci en raison de la disposition des bobinages dans la démarche de l'invention. Le bobinage peut donc se réduire, au niveau des parties actives, à la configuration montrée en (IV) à la figure 3, dans laquelle certaines encoches ont pu être éliminées avec leurs conducteurs. Comme enfin le trajet de retour des conducteurs est indifférent, l'enroulement se réduit à celui indiqué en (V) à la figure 3, dans lequel les deux bobinages de départ sont confondus. Cette disposition offre de nombreux avantages:

— simplification du bobinage rotorique;
— réduction de la quantité de cuivre ou d'aluminium à utiliser;
— augmentation considérable du flux qu'il est possible de canaliser;
— forte réduction des réactances rotoriques;
— bobinage réduit à quelques barres, confiné dans un même circuit magnétique.

La Fmm magnétomotrice ainsi engendrée dans les barres rotoriques par la variation du flux $\Phi 1$ comporte en réalité une composante de pas polaire $\tau$ se déplaçant avec une vitesse $(-v)$ et qui a pour effet de démagnétiser le flux $\Phi 1$ qui l'a engendré, mais cette Fmm comporte également une composante de pas polaire $\tau'=2\tau$ se déplaçant dans le même sens que le rotor avec une vitesse relative égale à vr=2v, si bien que le stator voit passer une onde de Fmm de pas polaire $\tau'=2\tau$ se déplaçant avec une vitesse 3v.

Cette Fmm de pas polaire $\tau'=2\tau$ crée une induction et par conséquent un $\Phi 2$ rencontrant un bobinage de pas polaire $\tau'$ lequel sera le siège des fem de sortie de l'alternateur. Ce même flux, vu la configuration des bobinages (pas polaire de multiple pairs), n'engendrera pas de fem dans le bobinage d'excitation (ou plus exactement la somme totale de fem est nulle).

Afin d'étendre ce qui précède on peut considérer un rotor développé suivant la figure 4. En relation avec ce rotor, le stator comprendra p paires de pôles de pas polaire $\tau$, ces p paires de pôles pourront indifféremment comporter soit:

A. — Un bobinage inducteur de pas polaire $\tau$ et un bobinage induit mono- ou polyphasé de pas polaire $\tau/2$.

B. — Un bobinage induit mono- ou polyphasé de pas polaire $\tau$ et un inducteur de pas polaire $\tau/2$.

A remarquer que dans les deux cas, ces deux bobinages ont une inductance mutuelle nulle, tandis que le rotor comprend p jeu de barres (chaque jeu de barre constituant une spire fermée dont l'ouverture angulaire est égale à $2\alpha$ (figure 4b).

Version A

Le défilement des p jeux de barres avec une vitesse v dans l'induction des p poles du stator y induit en courant de la forme

i=I max sin $\omega$ (t-to)

Si to est choisi de telle sorte qu'en t=o

i=I max, le courant dans chaque jeu de barre est

i=I max sin $\omega$t.

La force magnétomotrice (F.m.m.) a la forme donnée par la figure 4c.

Décomposée en série de Fourier cette F.m.m. peut s'écrire

$$\text{F.m.m.} = \frac{2i}{\pi} \sum_{\nu=1}^{n} \frac{(-1)^{\nu}}{\nu} \cdot \sin \nu\alpha \cdot \cos \nu \frac{\pi x}{\tau}$$

Soit à présent p.q jeux de barres rotoriques espacés de

$$\frac{2\pi}{q}$$

constituant un système q phasé, supposé direct dans sa numérotation (avec

$$2\alpha \leqslant \frac{2\tau}{q}).$$

Le développement en série de Fourier du $j^{eme}$ jeu de barre sera de la forme

$$\text{F.m.m.}_j = \frac{2i}{\pi} \sum_{\nu=1}^{n} \frac{(-1)^{\nu}}{\nu} \cdot \sin \nu\alpha \cdot \cos \nu \left[\frac{\pi x}{\tau} - (j-1) \frac{2\pi}{q}\right]$$

4

# O 038 879

Si, comme précédemment, to est choisi de manière à ce que le courant dans le $I^{er}$ jeu de barre soit égal à $i_1 = I \max \sin \omega t$, alors

$$i_j = I \max . \sin \left[\omega t - (j-1)\frac{2\pi}{q}\right]$$

Considérons à présent l'harmonique fondamentale ($\gamma = 1$) du développement en série de Fourier des q jeux de barres et déterminons la F.m.m. résultante, et par conséquent son action sur le bobinage de pas polaire $\tau$.

On obtient

$$\underset{\gamma=1}{Fmm} = - \frac{2\,I\max}{\pi} . \sum_{j=1}^{q} \sin \alpha . \sin\left[\omega t - (j-1)\frac{2\pi}{q}\right] . \cos\left[\frac{\pi x}{\tau} - (j-1)\frac{2\pi}{q}\right]$$

$$= - \frac{2\,I\max}{2\pi} \sum_{j=1}^{q} \sin\left[\omega t - \frac{\pi x}{\tau}\right] + \sin\left[\omega t + \frac{\pi x}{\tau} - 2(j-1)\frac{2\pi}{q}\right]$$

soit donc

$$\underset{\gamma 1}{Fmm} = - \frac{I\max . q}{\pi} \sin \alpha . \sin\left[\omega t - \frac{\pi x}{\tau}\right] - \frac{I\max . \sin \alpha}{\pi} \sum_{\gamma=1}^{q} \sin\left[\omega t + \frac{\pi x}{\tau} - 2(j-1)\frac{2\pi}{q}\right]$$

on sait que

$$\sum_{j=1}^{q} \sin[\beta + (j-1)\delta] = \sin\left[\beta + (q-1)\frac{\delta}{2}\right] . \frac{\sin q . \dfrac{\delta}{2}}{\sin \dfrac{\delta}{2}}$$

On voit immédiatement que:

a) pour q>2 la somme contenue dans le second membre de $\underset{\gamma=1}{F.m.m.}$ est identiquement nulle.

On a alors

$$\underset{\gamma=1}{F.m.m.} = - \frac{I \max . \sin \alpha . q}{\pi} \sin\left(\omega t - \frac{\pi x}{\tau}\right)$$

ce qui constitue une F.m.m. d'amplitude

$$\frac{I \max . \sin \alpha . q}{\pi}$$

se déplaçant dans le sens inverse de rotation du rotor avec une vitesse v et donc fixe par rapport au champ inducteur statorique de pas polaire $\tau$. Cette F.m.m. constitue alors une réaction d'induit.

b) q=2.
On obtient

$$\underset{\gamma=1}{F.m.m.} = - \frac{I \max . \sin \alpha}{\pi} . 2 . \left[\sin\left(\omega t - \frac{\pi x}{\tau}\right) + \sin\left(\omega t + \frac{\pi x}{\tau}\right)\right]$$

ce qui correspond à une F.m.m. pulsante de pas polaire $\tau$, se décomposant en 1 terme correspondant à une réaction d'induit (comme dans le cas q>2), l'autre terme produisant dans le stator une F.m.m. pulsant etrès gênante pour l'inducteur et ne pouvant (dans le cas où l'inducteur est alimenté en courant continu), être éliminée qu'au moyen d'une cage statorique de pas polaire $\tau$.

5

c) q=1

Même résultat qu'avec q=2, l'amplitude étant réduite de moitié pour un même courant dans les barres. Considérons à présent l'harmonique correspondant à $\gamma=2$ dans le développement en série de Fourier des q jeux de barres et déterminons la F.m.m. résultante et son action sur le bobinage de pas polaire $\tau/2$.

Nous avons

$$\text{F.m.m.}_{\gamma=2} = \frac{I\,max}{\pi} \cdot \sum_{j=1}^{q} \sin 2\alpha \cdot [\sin \omega t - (j-1)\frac{2\pi}{q}] \cdot \cos 2[\frac{\pi x}{\tau} - (j-1)\frac{2\pi}{q}]$$

soit

$$Fmm = \frac{Imax \cdot \sin 2\alpha}{\gamma 2 \quad 2\pi} \sum_{j=1}^{q} \sin[\omega t - \frac{2\pi x}{\tau} + (j-1)\frac{2\pi}{q}] + \sum_{j=1}^{q} \sin[\omega t + \frac{2\pi x}{\tau} - 3(j-1)\frac{2\pi}{q}]$$

Comme précédemment on voit aisément
a) que la 1<sup>ère</sup> sommation est identiquement nulle sauf pour q=1.
b) que la 2<sup>ème</sup> sommation est identiquement nulle sauf pour q=1 et q=3.

Il résulte de ce qui précède que les seules valeurs de q acceptables pour qu'une interaction entre les bobinages de pas polaire $\tau$ et $\tau/2$ soit réalisée se limite aux valeurs de q=1 et q=3.

Par q=3 on obtient finalement

$$\text{F.m.m.} = \frac{I\,max \cdot \sin 2\alpha}{\gamma 2 \quad 2\cdot\pi} \cdot 3 \sin[\omega t + \frac{2\pi x}{\tau}]$$

ce qui correspond à une F.m.m. de pas $\tau/2$ tournant dans le même sens que le rotor avec une vitesse v/2 et balayant par conséquent le bobinage induit de pas polaire $\tau/2$ avec une vitesse v+v/2, lequel sera alors le siège des forces électromotrices de sortie.

Pour q=1 nous aurions

$$Fmm = \frac{I\,max \cdot \sin 2\alpha}{\gamma 2 \quad 2\pi} \sin[(\omega t + \frac{2\pi x}{\tau}) + \sin(\omega t - \frac{2\pi x}{\tau})]$$

correspondant à une F.m.m. pulsante par rapport au rotor, laquelle se décompose en deux F.m.m. d'amplitude

$$\frac{I\,max \sin \cdot 2x}{2\pi}$$

tournant en sens opposés à une vitesse v/2 par rapport au rotor, lesquelles balayeront le bobinage induit du stator (pas $\tau/2$) avec une vitesse v+v/2 pour la 1<sup>ère</sup> et une vitesse v—v/2 pour la seconde et y induira 2 fem de fréquence et d'amplitudes différentes.

Version B.

Conservant la même disposition rotorique, supposons à présent que le stator dispose de 2 p paires de pôles inducteurs de pas polaire $\tau/2$ et un bobinage induit mono- ou polyphasé de pas polaire $\tau$.

Si la vitesse relative du stator par rapport au rotor est conservée (v), nous aurons en procédant comme précédemment:

$$i_j = I\,max \sin [2\omega t - 2(j-1)\frac{2\pi}{q}]$$

En déterminant l'harmonique résultant correspondant à $\gamma=1$ (et par conséquent son action sur le bobinage induit de pas polaire $\tau$ on obtient

$$Fmm_{\gamma=1} = -\frac{2Imax \cdot \sin \alpha}{\pi} \sum_{j=1}^{q} \sin[2\omega t - 2(j-1)\frac{2\pi}{q}] \cdot \cos[\frac{\pi x}{\tau} - (j-1)\frac{2\pi}{q}]$$

$$= \frac{\text{Imax sin } \alpha}{\pi} [\sum_{j=1}^{q} \sin(2\omega t + \frac{\pi x}{\tau} - 3(j-1)\frac{2\pi}{q}) + \sum_{j=1}^{q} \sin(2\omega t - \frac{\pi x}{\tau} - (j-1)\frac{2\pi}{q})]$$

On remarque aisément que
a) la 1ère somme est identiquement nulle sauf pour q=1 et q=3.
b) la 2ème somme est nulle sauf pour q=1.

si q=3.

$$Fmm_{\gamma=1} = -\frac{I\max . \sin \alpha}{\pi} . 3 \sin(2\omega t + \frac{\pi x}{\tau})$$

ce qui correspond à une fmm d'amplitude

$$\frac{3 I \max . \sin \alpha}{\pi}$$

de pas polaire $\tau$ se déplaçant par rapport au rotor avec une vitesse 2v, elle balayera le bobinage induit de pas polaire $\tau$ avec une vitesse 3v lequel sera alors le siège des fem de sortie.

si q=1.

$$Fmm_{j=1} = -\frac{I\max . \sin \alpha}{\pi} [\sin(2\omega t + \frac{\pi x}{\tau}) + \sin(2\omega t - \frac{\pi x}{\tau})]$$

Dans ce cas, nous remarquons que le bobinage induit de pas polaire $\tau$ est balayé par deux F.m.m. dont les vitesses relatives par rapport à ce bobinage sont respectivement de 3v et −v. La f.e.m. induite dans ce bobinage sera la résultante de 2 f.e.m. d'amplitudes et de fréquences différentes.

Voyons à présent l'influence de la résultante des F.m.m. sur le bobinage inducteur de pas polaire $\tau/2$.

$$F.m.m._{\gamma=2} = \frac{I\max \sin 2\alpha}{\pi} \sum_{j=1}^{q} \sin[2\omega t - 2(j-1)\frac{2\pi}{q}] . \cos[\frac{2\pi x}{\tau} - 2(j-1)\frac{2\pi}{q}]$$

On obtient finalement

$$F.m.m._{\gamma=2} = I\max . \sin 2\alpha . q . \sin(2\omega t - \frac{2\pi x}{\tau})$$

$$+ \frac{I\max . \sin 2\alpha}{2\pi} \sum_{j=1}^{q} \sin[2\omega t + \frac{2\pi x}{\tau} - 4(j-1)\frac{2\pi}{q}]$$

On remarque comme précédemment que le second terme est nul sauf pour q=1, 2, 4. Deux solutions sont donc à retenir:

1° — q=3.

$$F.m.m._{\gamma=2} = \frac{3 I \max}{2\pi} . \sin 2\alpha . \sin(2\omega t - \frac{2\pi x}{\tau})$$

Ceci correspond à une Fmm d'amplitude

$$\frac{3}{2\pi} I \max . \sin 2\alpha$$

# O 038 879

tournant dans le sens inverse du rotor avec une vitesse v et par conséquent fixe par rapport au bobinage inducteur, son action sera donc equivalente à une réaction d'induit.

2° — q=1.

$$Fmm_{\gamma=2}= \frac{I\ max\ .\ \sin 2\alpha}{2\pi}[\sin(2\omega t - \frac{2\pi\alpha}{\tau}) + \sin(2\omega t + \frac{2\pi\alpha}{\tau})]$$

Correspond à un champ pulsant dans le rotor, se décomposant en une Fmm directe et inverse de vitesse relative v par rapport au rotor.

Une de ces Fmm se comportera comme une réaction d'induit (fixe par rapport au stator) l'autre induira dans le bobinage inducteur une fem gênante.

Remarque: Un schéma de raisonnement identique permettrait la détermination des influences d'harmoniques d'ordre supérieur sur les différents enroulements.

Les considérations théoriques précédentes, ont eu pour but de montrer qu'il était possible conformément à l'invention de réaliser une machine tournante réalisant deux fonctions différentes dans un même circuit magnétique et dont le rotor suivant la théorique susdécrite est simplifiée à l'extrême.

Le bobinage rotorique relativement complexe que requiérerait une telle machine a pu être remplacé par un système de jeu de barres en court-circuit, disposé suivant un système dont la théorie montre qu'il ne peut être que triphasé ou monophasé.

Il est a remarquer que le système triphasé présente l'avantage considérable de limiter au maximum les interactions entre les bobinages inducteurs et induits du stator (figure 5).

D'autre part, l'angle 2$\alpha$ que traduit l'espacement entre les barres en court-circuit sera choisi en fonction de divers critères que seul le calcul d'une machine pour une application bien spécifique pourra rendre optimal.

Notons encore que dans le système triphasé lorsque 2$\alpha$ est choisi égal à 120°, deux barres successives se confondent et le système se réduit à la figure 6, dans lequel les espacements entre barres sont identiques.

Le courant traversant chaque barre (ib) est alors égal à la somme vectorielle des courants triphasés correspondants

$$\vec{ib_1} = \vec{i_1} + \vec{i_2};\ \vec{ib_2} = \vec{i_2} + \vec{i_3}\ \text{etc.}$$

$$\text{avec} |ib| = \frac{\sqrt{3}}{2} . 2 . |i| = |i|\sqrt{3}$$

Ce cas est particulièrement intéressant car:

— le nombre de barres est réduit de moitié;
— le courant total dans les barres est réduit d'environ 13%;
— le rotor peut être exécuté tel qu'un rotor de moteur asynchrone à cage, sans isolation des barres par rapport à la masse.

Cette disposition a été utilisée pour l'exemple pratique décrit dans la figure 3. L'enroulement induit utilisé dans le stator est ici du type diphasé.

Si l'accent a été plus particulièrement mis ci-avant sur la version alternateur de la machine selon l'invention, ceci ne constitue en aucune manière une limitation.

En effet, on peut prévoir, en vue de réaliser un moteur synchrone, de relier ledit premier enroulement à une source de courant polyphasé et le deuxième enroulement à une source de courant continu.

De même, pour obtenir un moteur asynchrone (hyposynchrone ou hypersynchrone), ledit premier enroulement est relié à une source de courants polyphasés et le deuxième enroulement est relié de manière classique à des éléments généralement passifs.

On peut en outre réaliser un moteur asynchrone synchronisé en prévoyant un commutateur sur l'alimentation du deuxième enroulement, de manière à assurer le démarrage de la machine, puis son alimentation en courant continu assurant sa synchronisation.

Il est évident que l'invention n'est pas limitée aux exemples susdécrits car de très nombreuses variantes d'exécution sont possibles en jouant sur l'angle 2$\alpha$, le choix du pas polaire pour l'excitation, la forme du bobinage d'excitation qui pourrait être réalisé en une seule bobine, le nombre total de paires de pôles, la vitesse, le choix du type d'enroulement statorique polyphasé, la fixation éventuelle du rotor et l'utilisation d'une culasse à barre, l'énumération précédente n'étant pas limitative.

8

**0 038 879**

Dans le cas précité d'un bobinage d'exitation réalisé en une seule bobine, il peut être avantageusement réalisé en une seule bobine dont l'axe coïncide avec celui de la machine, cette bobine étant disposée entre deux demi-stators identiques mais décalés angulairement de manière à former alternativement des pôles de nom contraire, le circuit magnétique étant fermé à l'extérieur par un matériau magnétique correctement disposé.

## Revendications

1. Machine électrique tournante, du type comprenant une partie fixe (1) et une partie mobile (2) coaxiales, la partie fixe portant un premier et un deuxième enroulement (3, 4) et la partie mobile un troisième enroulement (5), les premier et deuxième enroulements (3, 4) ayant des pas polaires multiple pair ou sous-multiple pair l'un de l'autre et une inductance mutuelle nulle, le troisième enroulement (5) étant unique et fermé sur lui-même, l'arrangement étant tel que le premier enroulement (3) puisse générer un champ inducteur induisant des courants dans le troisième enroulement (4), ces derniers générant un champ inducteur en rotation relative par rapport à la partie mobile (2), de même pas polaire que le deuxième enroulement (3) et interagissant magnétiquement avec ce dernier, caractérisée en ce que ce troisième enroulement est constitué par un nombre de jeux de barres (5), dont chacun comprend deux barres interconnectées, ledit nombre de jeux de barres étant soit égal au nombre de paires de pôles de l'enroulement statorique de pas polaire le plus large (4) dans le cas d'une réalisation monophasée du rotor (2), soit le triple de ce nombre de paires de pôles dans le cas d'une réalisation triphasée.

2. Machine selon la revendication 1, caractérisée en ce que, dans le cas d'une réalisation triphasée, chacune des barres (5) constitutives d'un jeu, est commune à deux jeux de barres consécutifs, l'ensemble ainsi formé réalisant une cage d'écureuil (2, 5).

3. Machine selon la revendication 2, caractérisée en ce que lesdites barres (5) sont régulièrement espacées sur la périphérie du rotor (2).

4. Machine selon la revendication 1, caractérisée en ce que, destinée à fonctionner comme alternateur synchrone, son premier enroulement (3) est relié à une source de courant continu, le second enroulement (4) étant le siège de forces électromotrices de sortie.

5. Machine selon la revendication 1, caractérisée en ce que, destinée à fonctionner comme moteur synchrone, son premier enroulement (3) est relié à une source de courant polyphasé tandis que son second enroulement (4) est relié à une source de courant continu et constitue l'inducteur de synchronisation du moteur.

6. Machine selon la revendication 1, caractérisée en ce que l'enroulement d'excitation (3) est réalisé en une seule bobine dont l'axe coïncide avec celui de la machine, cette bobine étant disposée entre deux demi-stators identiques mais décalés angulairement de manière à former alternativement des pôles de nom contraire, le circuit magnétique étant fermé à l'extérieur par un matériau magnétique correctement disposé.

7. Machine selon la revendication 1, caractérisée en ce que, destinée à fonctionner comme moteur asynchrone, son premier enroulement (3) est relié à une source de courant polyphasé, son second enroulement (4) constituant l'organe secondaire induit du moteur.

8. Machine selon la revendication 1, caractérisée en ce que, destinée à fonctionner comme moteur asynchrone synchronisé, son premier enroulement (3) est relié à une source de courant polyphasé, un commutateur étant prévu afin de faire fonctionner le deuxième enroulement (4), dans un premier temps, comme organe secondaire induit assurant le démarrage du moteur et, dans un deuxième temps, pour l'alimenter en courant continu afin d'assurer la synchronisation du moteur.

9. Machine selon la revendication 1 résultant d'une superposition linéaire de la disposition décrite dans cette revendication, entre autres la superposition de divers jeux de barres (5) dont l'angle d'ouverture entre les barres est différent.

## Patentansprüche

1. Drehende elektrische Maschine der aus zwei Koachsialteilen, d.h. aus einem unbeweglichen Teil oder Stator (1) und einem beweglichem Teil oder Rotor (2) bestehenden Art, wobei der unbewegliche Teil (1) mit einer ersten und einer zweiten Wicklung (3, 4) und der bewegliche Teil (2) mit einer dritten Wicklung (5) versehen ist, die gegenseitige Induktanz der ersten beiden Wicklungen (3, 4) Null ist, die Polteilung der einen Statorwicklung ein gerades Vielfache oder eine gerader Teiler der anderen Statorwicklung ist und die dritte Wicklung (5) nur aus einer einzigen, geschlossenen Wicklung besteht, dies alles derart, dass die erste Wicklung (3) sich für die Erzeugung eines Induktionsfeldes eignet, das elektrische Ströme in der dritten Wicklung erzeugt, welche ihrerseits ein in bezug auf den beweglichen Teil (2) drehendes eine der Polteilung der zweiten Wicklung (4) entsprechende Polteilung aufweisendes und in magnetischer Wechselwirkung mit der zweiten Wicklung (4) stehendes Induktionsfeld erzeugen, dadurch gekennzeichnet, dass die vorgenannte dritte Wicklung aus einer Anzahl Stäbesätze (5) besteht, wobei jeder Satz aus zwei miteinander verbundenen Stäben besteht und die Anzahl Stäbesätze entweder der Anzahl Polpaare der Statorwicklung mit der grösseren Polteilung (4) bei einphasiger Ausfürung des Rotors (2), oder dem dreifachen Wert dieser Anzahl Polpaare bei dreiphasiger Ausführung des Rotors entspricht.

2. Maschine gemäss dem Anspruch 1, dadurch gekennzeichnet, dass bei dreiphasiger Ausführung jeder Stab eines Stäbesatzes (5) zu zwei aufeinanderfolgenden Sätzen gehört, so dass das derart gebildete Ganze ein Käfigrotor (2, 5) ist.

3. Maschine gemäss dem Ansprüch 2, dadurch gekennzeichnet, dass die vorgenannten Stäbe (5) regelmässig über den Rotorumfang verteilt sind.

4. Maschine gemäss dem Ansprüch 1, dadurch gekennzeichnet, dass bei Ausführung als Synchronwechselstromgenerator, ihre erste Wicklung (3) an eine Gleichstromquelle angeschlossen ist und ihre zweite Wicklung (4) ein elektromotorisches Kraftfeld erzeugt.

5. Maschine gemäss dem Anspruch 1, dadurch gekennzeichnet, dass bei Ausführung als Synchronmotor, ihre erste Wicklung (3) an eine Mehrphasenstromquelle angeschlossen ist und ihre zweite Wicklung (4) an eine Gleichstromquelle angeschlossen ist und den Synchronisierungsinduktor des Motors bildet.

6. Maschine gemäss dem Anspruch 1, dadurch gekennzeichnet, dass die Erregungswicklung (3) aus einer einzigen Spule besteht, welche mit der Maschinenwelle koachsial ist und zwischen zwei identischen Statorhälften angeordnet ist, welche derart gegenseitig winkelverschoben sind, dass sie abwechselnd zwei Pole entgegengesetzer Zeichen bilden, und dass der magnetische Kreis innen mittels eines zweckmässig angeordneten geeigneten magnetischen Materials geschlossen ist.

7. Maschine gemäss dem Anspruch 1, dadurch gekennzeichnet, dass, bei Ausführung als Asynchromotor, ihre erste Wicklung (3) an eine Mehrphasenstromquelle angeschlossen ist und ihre zweite Wicklung (4) den sekundär induzierten Teil des Motors bildet.

8. Maschine gemäss dem Anspruch 1, dadurch gekennzeichnet, dass, bei Ausführung als synchronisierter Asynchromotor, ihre erste Wicklung (3) an eine Mehrphasenstromquelle angeschlossen ist, und ein Umschalter vorgesehen ist, deren Aufgabe es ist die zweite Wicklung (4) während einer ersten Stufe als sekundär induzierten Teil zwecks Sicherung des Motoranlaufes zu schalten und sie während einer zweiten Stufe auf Gleichstrom zwecks Sicherung der Synchronisierung des Motors umzuschalten.

9. Maschine gemäss dem Anspruch 1, dadurch gekennzeichnet, dass sie durch Linearzusammenschaltung sämtlicher in diesem Anspruch beschriebener Teile, wie u.a. der vorgenannten Stäbesätze, gebildet wird, wobei der Winkel zwischen den Stäben (5) nicht überall denselben Wert hat.

**Claims**

1. Rotating electric machine of the type comprising a fixed part (1) and a mobile part (2) coaxial to each other, the fixed part bearing a first and a second winding (3, 4) and the mobile part a third winding (5), the first and second windings (3, 4) having pole pitches multiple pair or sub-multiple pair of each other and a zero mutual inductance, the third winding (5) being unique and closed in itself, the arrangement being such that the first winding (3) can generate an induction field inducting currents into the third winding (5), the latter generating an induction field in relative rotation to the mobile part (2), of the same pole pitch as the second winding (4) and magnetically interactive with the latter, characterized thereby that said third winding consists of a number of sets of rods (5), each of which consists of two interconnected rods, the said number of rods being either equal to the number of pole pairs of the stator winding of the largest pole pitch (4) in case of a monophase embodiment of the rotor (2), or the threefold of said number of pole pairs in the case of a threephase embodiment.

2. Machine according to claim 1, characterized thereby that in the case of a threephase embodiment, each of the rods consisting of a set, is common to two successive sets of rods, the whole realising a squirrel cage (2, 5).

3. Machine according to claim 2, characterized thereby that the said rods (5) are regularly spaced along the periphery of the rotor (2).

4. Machine according to claim 1, characterized thereby that, intended to function as a synchronous alternator, its first winding (3) is connected with a direct current source, the second winding (4) being the seat of the outgoing electromotive forces.

5. Machine according to claim 1, characterized thereby that, intended to function as a synchronous motor, its first winding (3) is connected with a polyphase current source, whereas its second winding (4) is connected with a direct current source and constitutes the synchronisation inductor of the motor.

6. Machine according to claim 1, characterized thereby that the excitation winding (3) is realized in one single coil, the axis of which coincides with that of the machine, this coil being placed between two identical half-stators, but angularly displaced in order to form alternatively the poles of opposite name, the magnetic circuit being closed at the outside by a correctly placed magnetic material.

7. Machine according to claim 1, characterized thereby that, intended to function as an asynchronous motor, its first winding (3) is connected with a polyphase current source, its second winding (4) constituting the secondary inductance organ of the motor.

8. Machine according to claim 1, characterized thereby that, destined to function as a synchronized asynchronous motor, its first winding (3) is connected with a polyphase current source, a commutator being provided in order to make the second winding (4) function, in a first period, as a secondary inductance organ ensuring the starting of the motor and, in a second period, to feed in direct current in order to assure the synchronisation of the motor.

9. Machine according to claim 1, resulting from a linear superposition of the arrangement described in said claim, among other things the superposition of different sets of rods (5) the opening angle between the rods of which is different.

*Fig.1*

*Fig.2*

0038 879

*Fig.3*

# Fig.4

$\phi_1$

0  $\pi/2$  $\pi$  $3\pi/2$  $2\pi$

$\tau$

$i$  $\overrightarrow{V(2\tau f)}$  $i$

$\mathscr{F}mm$

$2\alpha$

$i$

0  $\pi$  $2\pi$

# Fig.5

$2\alpha$

$i_1$  $i_2$  $i_3$

$2\pi/3$

# Fig.6

$ib_1$  $ib_2$

$2\alpha = 120°$

3